# EUROPEAN PATENT APPLICATION

(11) **EP 4 826 320 A1**
(43) Date of publication of application: **21.10.2026**
(21) Application number: 26173267.1
(22) Date of filing: 20.04.2026
(51) Int. Cl.: F26B 5/02, B29B 13/06, F26B 3/06, F26B 17/14

(54) **IMPROVED METHOD FOR DRYING POLYMER GRANULATE AND A DEVICE FOR DRYING POLYMER GRANULATE**

(30) Priority: 20.04.2025 NL 2040220
(71) Applicant: Ferlin Trading B.V., 7442 DR Nijverdal (NL)
(72) Inventor: FIX, Mathijs Egbert, 7701VR Dedemsvaart (NL); BROUWER, Peter Tijmen, 7543GW Enschede (NL)
(74) Representative: Mink-Lindenburg, Charlotte Hildegard

(57) **Abstract**

The present patent application relates to a method and a device for drying hygroscopic polymer granulate in a continuous process, wherein liquid is extracted from the granulate by means of drying means. During the drying process, the granulate is caused to vibrate by means of vibration means with a vibration frequency higher than 15,000 Hertz. These vibration means comprise one or more plate-shaped vibrating elements that are positioned in a channel and are physically in direct contact with the granulate. Herein, at least one ultrasonic transducer is directly mounted on the plate-shaped vibrating element to cause it to vibrate. It is the object of the invention to maximize the acoustic transfer of the ultrasonic vibration energy to the granulate without damping losses via an outer wall, in order to provide an improved method and device that considerably accelerate the drying process and consume significantly less energy.

## Description

The present patent application relates to a method according to the preamble of claim 1.

Polymer granulate is often hygroscopic due to the presence of hydrophilic functional groups that can form hydrogen bonds with water molecules. In addition, the physical structure of the granulate, such as porosity and capillary effects, and the interactions between water molecules play a role in the absorption and retention of moisture.

In the current prior art for drying polymer granulate in which liquid is extracted from the granulate by means of a drying process, five solutions can be distinguished. The first solution uses a hot air dryer. This type of dryer extracts air from the atmosphere/environment and pumps it into the system. The air flows through a heating element and is brought to the desired temperature. The warm air is directed in a large hopper past the granulate and absorbs water vapor. The air, with the increased humidity, is directed outside and dumped back into the atmosphere. The disadvantage of this solution is that air from the atmosphere has a relatively high air humidity. This solution does not lower the absolute humidity of the air, whereby it cannot dry most types of plastic pellets. Most plastic pellets have a hygroscopic property, which means that the material attracts and absorbs water from the air. Plastic pellets that have this property cannot be brought to a low enough moisture content by a hot air dryer.

The second solution uses a dry air dryer. This solution dries plastic pellets by means of dry air. The moisture content of the dryer is reduced by means of a desiccant. The dryer has two drums with desiccant. One drum is used to dry air that circulates around inside of the dryer. The air is pumped through the drum, becomes dry, and is subsequently directed to a heating element. After that, the air is blown into the hopper with pellets. The air is subsequently cooled and directed back to the drum with desiccant. When the desiccant is saturated with moisture, the drum is dried. During the drying of the drum, the second drum is used to dry the plastic pellets. A drum with desiccant is dried by pumping air from the atmosphere through the drum and by heating the drum and the air. This solution ensures that hygroscopic materials can be dried. The disadvantage of this solution is a long process time and high energy costs due to a continuous heating and blowing process. Another disadvantage is a varying dew point temperature whereby the humidity of the air blown into the hopper also varies.

The third solution uses a rotating wheel dryer. This solution also works by means of a desiccant. However, the desiccant is placed in a rotating wheel. As a result, air can simultaneously be pumped past the desiccant to lower the air humidity and the desiccant can be dried. A sector of the wheel with desiccant is dried by heating air from the atmosphere, pumping it past the desiccant and subsequently blowing it back into the air. Other air circulates past another sector of the wheel with desiccant, subsequently past a heating element, the hopper with pellets and a cooling element before it goes past the desiccant again. This solution ensures a stable dew point temperature. The disadvantage of this solution is a long process time with high energy costs. Again, due to a continuous heating and blowing process.

The fourth solution uses a vacuum dryer. This solution consists of three sectors that are stacked on top of each other. The top sector is a hopper in which the pellets are heated up in the same way as in a hot air dryer. When the pellets are warm, they are moved to the second sector, the middle sector, which consists of a vacuum drum. By drawing a vacuum, the boiling point of water is lowered, whereby water evaporates. Subsequently, the pellets are moved to the bottom sector, where they can be cleared of moisture by means of dry air and can be kept in a dry environment whereby they no longer absorb moisture. This method can also dry hygroscopic materials. Also, the process and energy costs of this process are lower than in the other solutions. The disadvantage of this solution is that it is a batch process and not a process in which granulate can continuously flow through a hopper.

The fifth solution uses a compressed air dryer. This solution consists of a hot air dryer, except that the air is not taken directly from the atmosphere but is first compressed in a compressor. As a result, a low dew point is also achieved, which means that the air has a low air humidity. As a result, this solution can also dry hygroscopic materials. The disadvantage of this solution is again a lengthy process duration and high energy costs.

A significant disadvantage of these existing drying techniques, however, is their energy-intensive character, which represents a considerable part of the total energy consumption in the polymer industry. This high energy consumption contributes to both the operational costs and the environmental impact. Although improvements have been made to these solutions over the years, in particular in the field of climate control and smart systems, there is a continuous need for more fundamentally innovative and sustainable drying principles.

From the prior art, document CN214056017 is known, which shows a drying drum in which ultrasonic transducers are mounted on the smooth outer side of the wall. The disadvantage of this device is that the transducer is not placed directly on an internal vibrating element, which leads to considerable damping and energy loss because the sound must travel through the wall.

From the prior art, document JP4279959 is also known, which shows the use of an external acoustic vibration source to cause a hopper in its entirety to vibrate. Here too, the direct mounting on a plate-shaped vibrating element in the granulate stream is missing, whereby a directed and efficient acoustic coupling with the granulate is impossible.

From the prior art, document CN 217257563 is also known, which shows the use of cylindrical ultrasonic transducers that are mounted internally on a moving stirring mechanism. Herein, stationary plate-shaped vibrating elements with a transducer directly mounted thereon are missing, whereby the device does not function as a uniform acoustic emitting surface for the granulate flowing past.

Finally, from the prior art, document CN 2583591 is known, which shows internal zigzag-placed grid plates in a drying hopper, in which an ultrasonic transmitter hangs loose in the air in the upper part of the hopper. Because the transducer is not directly mounted on the vibrating elements themselves, the plates do not function as direct acoustic amplifiers, which leads to an extremely inefficient sound transfer through the air.

It is the object of the invention to provide an improved method for drying polymer granulate, which eliminates the above-mentioned disadvantages and in which liquid is extracted from the granulate by means of a drying process, in which the energy consumption is reduced and in which the transfer of the ultrasonic vibration energy to the granulate is maximized without damping losses.

To this end, the method according to the invention is characterized in that the method comprises the steps of:
a) extracting liquid from the granulate by means of a drying process, in which liquid absorbed by the granulate is extracted from the granulate;
b) causing the granulate to vibrate by means of vibration means with a vibration frequency higher than 15,000 Hertz during the execution of step a);
in which the vibration means comprise one or more plate-shaped vibrating elements that are positioned in a channel and are physically in direct contact with the granulate, in which at least one ultrasonic transducer is directly mounted on the plate-shaped vibrating element to cause it to vibrate.

Because the transducer directly drives the plate-shaped element, the plate itself functions as an undamped acoustic amplifier in the granulate stream. The effect of the plate-shaped vibrating elements with directly mounted transducer is therefore a direct and maximum transfer of the mechanical vibration energy to the granulate, through an optimized contact area.

Preferably, air is used as the drying process for the drying of the granulate and the following sub-step is executed: b1) directing the air of the drying process over the vibration means. This has the advantage that the air cools the vibration means. A transducer namely produces a lot of heat in use and by directing the air over the transducer, the produced heat is dissipated in an advantageous manner. By first directing the air over the vibration means before directing it over the granulate, the heated air can be advantageously used for the further drying of the granulate. The effect is a considerable increase in the overall energy efficiency and process stability by recovering residual heat and simultaneous cooling.

In the embodiment in which the drying process uses dry air, the channel preferably comprises a hopper, in which the channel is arranged substantially vertically and in which the dry air is blown upward via an underside of the hopper and the granulate is introduced into the channel via a top side of the hopper, in which the granulate leaves the drying hopper via an underside of the channel. The upward dry air flow and downward material flow (counter-current) in combination with ultrasonic vibrations aim for a combined and efficient drying process. The dry air extracts moisture, while the ultrasonic vibrations promote the moisture release from the granulate in a continuous flow-through setup. The effect is a continuous, optimized exchange of mass (moisture) between the granulate and the counter-current dry air flow.

In a very advantageous embodiment, causing the granulate to vibrate downstream is carried out sequentially in at least two phases: a first phase in which the granulate is exposed to a first ultrasonic vibration with a first frequency and a first power; and a second subsequent phase in which the granulate is exposed to a second ultrasonic vibration with a second frequency and a second power; in which the second frequency is higher than the first frequency, and the second power is lower than the first power. The effect of this double sequential phase is that the drying process is optimized based on the changing moisture level of the material in the flow.

Herein, the first ultrasonic vibration is chosen such that the vibration causes cavitation in moisture bubbles within the granulate to break down hydrogen bonds, and the second ultrasonic vibration is chosen such that it brings the moisture bubbles reduced by cavitation into resonance. The effect of this can be explained by Fick's first law, which describes the diffusion rate of moisture in the material by means of the formula J = -D(∂C/∂x). In this formula, J stands for the mass flux (the speed at which the moisture exits), D for the diffusion coefficient, and ∂C/∂x for the concentration gradient. To accelerate the drying process and to achieve a larger mass flux (J), the diffusion coefficient (D) must be maximally increased by increasing the activation energy and the mobility of molecules, as well as reducing the molecular size and molecular interaction. For this purpose, the first ultrasonic vibration causes cavitation in which moisture bubbles implode into multiple smaller bubbles and so-called 'microjets' arise. These powerful local pressure jets break the rigid hydrogen bonds with which water molecules are connected to the plastic chain. Subsequently, the second, higher ultrasonic frequency ensures that the resulting, reduced bubbles are brought exactly into resonance. This adds movement and with it considerable activation energy to the bubbles. By means of this combined application, the diffusion coefficient (D), and as a direct consequence thereof the mass flux (J), is maximized whereby the moisture diffuses out of the material in a considerably shorter time, resulting in a substantially lower energy consumption per kilogram of dried granulate.

To reduce the energy consumption even further, in an embodiment the granulate is preheated in an upper part of the channel with warm recirculating air, and further dried in a lower part with dry compressed air. The effect of this dual air system is a considerable reduction in the costs of compressed air, because the thermal conditioning in the upper zone is cost-efficiently taken over by recirculating air.

The invention also relates to a device according to the preamble of claim 7 for performing the method described above. To this end, the device is characterized in that the device further comprises one or more vibration means to cause the granulate to vibrate by means of vibrations by using sound waves with a frequency higher than 15,000 Hertz, in which the vibration means comprise at least one ultrasonic transducer and one or more plate-shaped vibrating elements, which plate-shaped vibrating elements are positioned in the channel and are arranged to be physically in contact with the granulate, and in which the ultrasonic transducer is mounted directly on the plate-shaped vibrating element and is arranged to cause the vibrating element to vibrate. The object of the invention is to achieve the advantages of said method. Just as with the method, the effect of this specific device is the realization of an undamped, direct transfer of vibrations via an emitting surface (the plate) to the passing granulate pellets.

In the embodiment in which the drying means comprise blowing means for blowing air over the granulate, the device is further arranged to blow the air coming from the blowing means over the vibration means. This achieves both proactive cooling of the transducers and energy-saving preheating of the dry air.

In a specific embodiment, the one or more plate-shaped vibrating elements extend from outside the channel into the channel and the ultrasonic transducer is mounted on the vibrating element on the outer side of the channel. The effect of this is that the electronics of the transducer remain outside the heavy thermal and dusty process conditions in the channel.

In a further preferred embodiment of the device, the drying means comprise blowing means arranged to blow dry air, and the channel is tubular and arranged substantially vertically. The channel comprises a funnel-shaped portion at an underside, in which the dry air coming from the blowing means in operation is directed in an upward direction through the channel and through the funnel-shaped portion, and collecting means for collecting granulate at an underside, which granulate has been introduced via a top side. The effect of this is the creation of a mechanically optimal counter-current process, driven by gravity.

In an alternative embodiment, the plate-shaped vibrating elements are disc-shaped and the vibrating elements with the transducers are located entirely within the channel. The effect of the disc shape is the exclusion of unpredictable asymmetrical vibration modes that occur with rectangular rods, which leads to an extremely predictable, homogeneous radial energy transfer to the surrounding mass and also leads to an improvement in the efficiency of the energy transfer through the tuning between the frequency of the transducer and the natural frequency of the disc-shaped vibrating element.

To execute the above-mentioned method with cavitation and resonance, the device in a further embodiment comprises at least a first and a second ultrasonic transducer respectively mounted on a first and second plate-shaped vibrating element in the channel, in which the second ultrasonic transducer is positioned downstream relative to the first, and in which the first transducer is arranged for a first frequency and power, and the second transducer is arranged for a second, higher frequency and a second, lower power. The effect is that the device creates separate cavitation and resonance zones using Fick's first law.

In the embodiment with fully internally placed transducers, these are placed in the channel downstream under the plate-shaped vibrating elements, and they comprise a housing with a shape that is arranged to guide air that is blown upward from the hopper around the transducers. The effect of this is that flow resistance of the dry air is minimized, in combination with maximum and uniform cooling of the housings by the passing dry air.

Finally, the drying means of the device preferably comprise a first outlet at an underside for blowing out dry compressed air, and a second outlet, positioned above the first outlet, for blowing out warm recirculating air for preheating. The effect of this is the physical separation of expensive compressed air and cheaper recirculating air, which is particularly advantageous in large drying installations (>70 litres).

The invention will be further explained with reference to the following figures, in which:
Figure 1 shows a cross-sectional view of a first embodiment of a device according to the invention with a configuration of an ultrasonically assisted dryer for drying polymer granulate;
Figure 2 shows an isometric view of a second embodiment of a device according to the invention with a configuration of an ultrasonically assisted dryer for drying polymer granulate;
Figure 3 shows a cross-sectional view of the second embodiment of the device according to Figure 2;
Figure 4 shows a top view of the second embodiment of the device according to Figure 2;
Figure 5 shows a detailed cross-sectional view of a further embodiment of a device according to the invention;
Figure 6 shows an isometric view of a larger embodiment of the device;
Figure 7 shows a detail view in cross-section of the lower, funnel-shaped portion of the device from Figure 6.

Like reference numerals denote like parts.

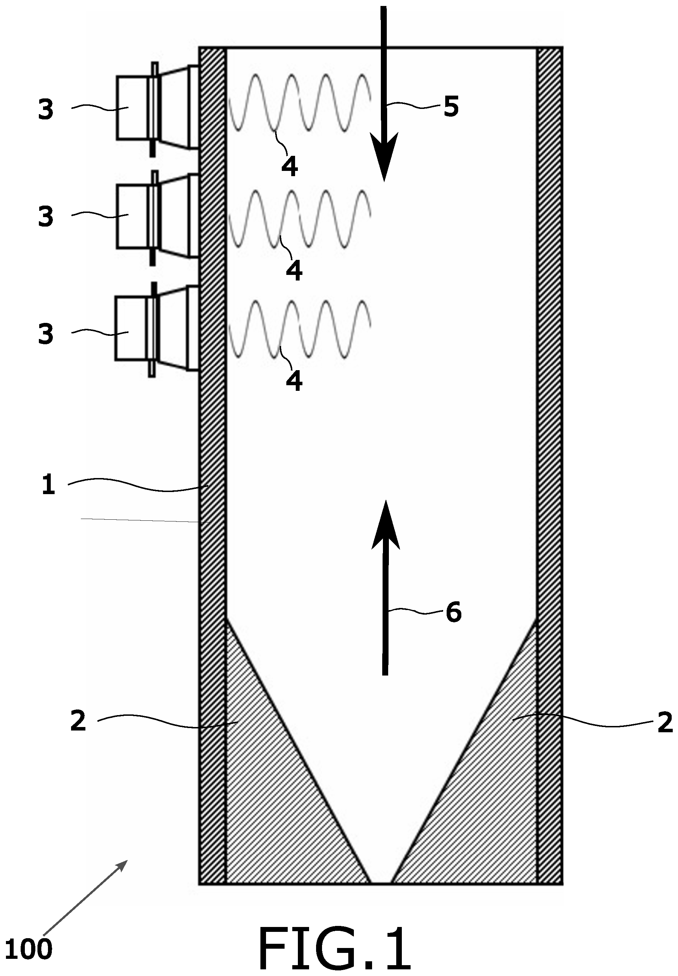

Figure 1 shows a cross-sectional view of a first embodiment of a device according to the invention with a configuration of an ultrasonically assisted dryer for drying polymer granulate. Figure 1 shows a part of the device 100, in which in particular a tubular channel 1, hereafter referred to as tube, for use in the dryer is shown. A hopper 2 is arranged at the underside of the tube 1. The polymer granulate is introduced via the top side of the tube 1, in which arrow 5 indicates the direction of movement of the granulate. Dry air is introduced into the tube via openings (not shown) near or on the hopper 2. Arrow 6 shows the direction of movement of the dry air. Preferably, the dry air comes from a compressed air generator.

Directly on the outer side of the tube 1, three transducers 3 are mounted. The number of transducers is not limited to three but can be any number that is practically feasible.

The operating principle of this configuration is as follows: the ultrasonic sound transmitters or transducers 3 generate ultrasonic vibrations in operation of the device 100. Because these transducers 3 are mounted directly on the tube 1, these vibrations are transferred to the tube wall of tube 1. The walls of the tube 1 vibrate as a result and emit the ultrasonic sound 4 into the tube, where the plastic pellets are located.

The dry air dries the granulate in a counter-current principle. Because the ultrasonic sound agitates the granulate, the drying of the granulate during the downward fall is improved.

The object of this setup is to accelerate the drying process of the plastic pellets and make it more energy efficient. The ultrasonic sound breaks down hydrogen bonds, agitates the water molecules in the pellets and opens the pores in the pellets, which results in an accelerated diffusion process of the moisture from the pellets. As a result, the drying time can be shortened or the temperature of the drying process can be lowered, which leads to less energy use. The solution according to Figure 1 is designed as a continuous process, in which the granulate can constantly flow downward out of the hopper.

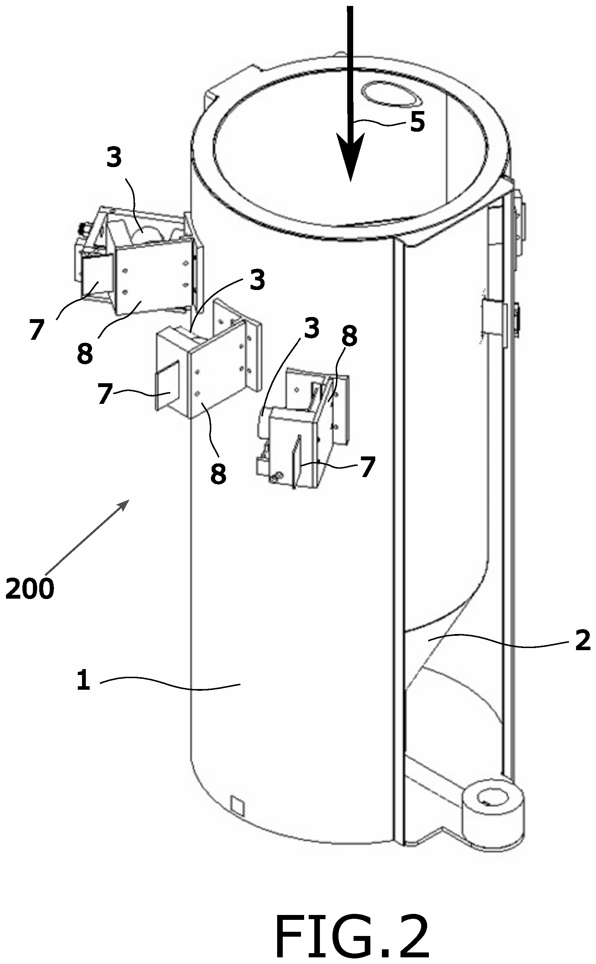

Figure 2 shows an isometric view of a second embodiment of a device 200 according to the invention with a configuration of an ultrasonically assisted dryer for drying polymer granulate. Figure 2 shows a part of the device 200, in which in particular a tubular channel 1, hereafter referred to as tube, for use in the dryer is shown. Similar to the first embodiment according to Figure 1, a hopper 2 is arranged at the underside of the tube 1. The polymer granulate is introduced via the top side of the tube 1, in which arrow 5 indicates the direction of movement of the granulate. Dry air is introduced into the tube via openings (not shown) near or on the hopper 2. The direction of movement of the dry air is similar to the embodiment according to Figure 1. Four transducers 3 are arranged on the outer side of the tube 1, three of which are shown. In this embodiment, the transducers 3 are positioned at different heights in the axial direction of the tube 1. Different from the first embodiment according to Figure 1, the transducers 3 have no direct connection to the tube 1. Each of the transducers 3 lies against a vibrating plate 7, which extends through the tube 1. Each transducer 3 and vibrating plate 7 are supported by a first support frame 8, which is attached to the tube 1.

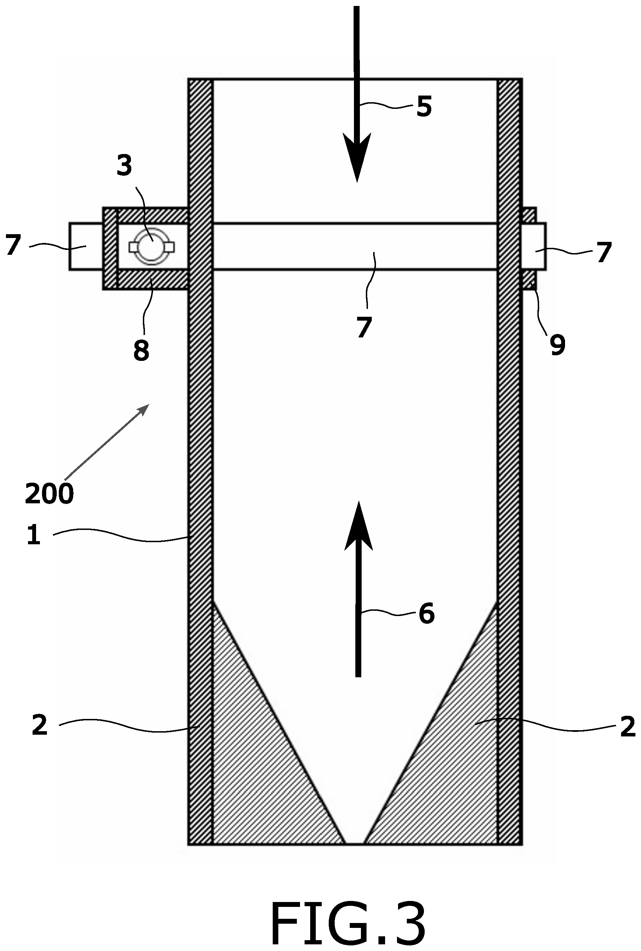

Figure 3 shows a cross-sectional view of the second embodiment of the device 200 according to Figure 2, in which one transducer 3 and one vibrating plate 7 are shown in the cross-section.

The vibrating plate 7 extends via the tube wall of the tube 1 through the opposite side of the tube 1. For support, the vibrating plate 7 is supported on the opposite side by a second support frame 9. At the positions where the vibrating plate 7 extends through the tube 1, an airtight seal is arranged to prevent air from leaking from the inside of tube 1 to the outside of tube 1.

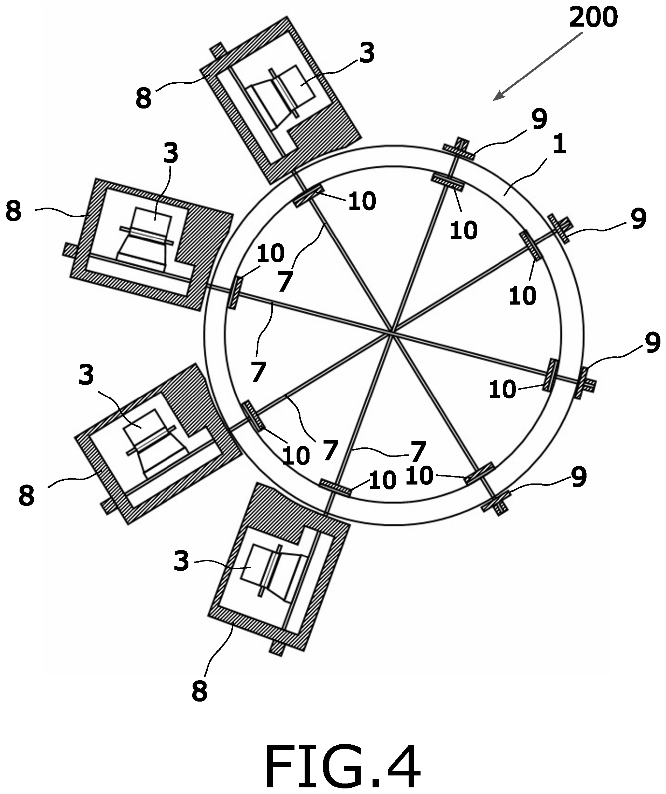

Figure 4 shows a top view of the second embodiment of the device 200 according to Figure 2, in which the positions of the four transducers 3 are clearly shown. The vibrating plates 7 which are each coupled to a transducer 3 extend through the tube, where each vibrating plate is arranged at a different height relative to the underside or top side of the tube 1. Seen from above, the vibrating plates 7 are preferably radially equally distributed. In the figure, the airtight seal 10 is also shown, as discussed in Figure 3.

The second embodiment of the device 200 according to Figures 2, 3 and 4 has advantages relative to the first embodiment of the device 100 according to Figure 1 due to the way in which ultrasonic sound is applied directly to the plastic pellets in the drying hopper.

First, there is a direct sound emission to the pellets: In the shown configuration, there are vibrating plates 7 mounted in the wall of the tube 1 that are specifically designed to emit ultrasonic sound. An ultrasonic sound transmitter or ultrasonic transducer 3 is mounted on the outside of the tube 1 on these vibrating plates 7. When a transmitter 3 is activated, it causes the vibrating plate 7 to vibrate with a frequency higher than 20 kHz. This vibrating plate subsequently directly emits ultrasonic sound into the tube 1, directly to the plastic. This ensures a more efficient transfer of the ultrasonic energy to the material to be dried.

Secondly, there are distributed sound sources. An important advantage is that the vibrating plates 7 with the sound transmitters 3 are distributed throughout the tube 1. As a result, a larger part of the plastic pellets in the tube 1 can be reached by the ultrasonic sound. This is a significant difference with the first embodiment, the sound traveling through the wall of the tube 1 and the exposure of the pellets to the sound possibly being less uniform and intense over the entire volume.

Thirdly, there is a better penetration and effectiveness. Due to the direct emission of the vibrating plates 7 that are integrated in the tube wall 1, the ultrasonic sound can penetrate better into the mass of the plastic pellets. The sound does not first have to travel through the material of the hopper itself, which could lead to energy loss and damping of the sound waves. The distributed setup also ensures that pellets at different levels and locations in the hopper are exposed to the vibrations more effectively.

Fourthly, an optimization of the drying process is achieved. The object of the invention is to accelerate the drying process and to lower the energy costs. Due to the more direct and distributed application of ultrasonic sound in the embodiment according to Figures 2, 3 and 4, it is intended to break down the hydrogen bonds in the pellets more effectively, to agitate the water molecules better and to open the pores, which accelerates the diffusion process of moisture. In summary, the embodiments in Figures 2, 3 and 4 offer the advantage of a more directed and distributed application of ultrasonic sound directly to the plastic pellets in the drying hopper. This leads to a more efficient drying process with lower energy costs compared to an embodiment in which one or more ultrasonic transducers are only mounted on the outer side of the tube 1.

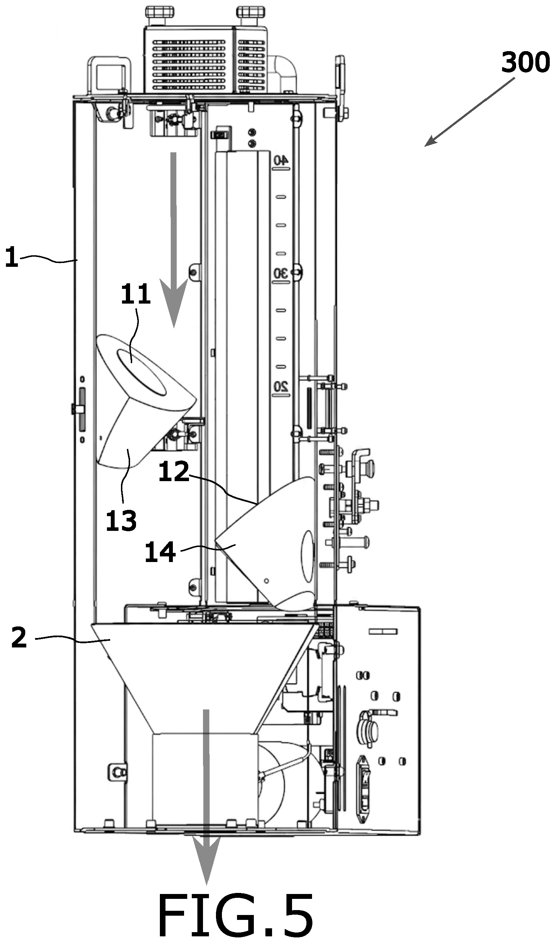

Figure 5 shows a detailed cross-sectional view of a further embodiment of a device 300 according to the invention, in which the ultrasonic vibration means are located entirely inside the channel 1. Similar to the earlier embodiments, the device 300 comprises a tubular channel 1 with a funnel-shaped portion 2 at the underside. The polymer granulate flows in a continuous movement from top to bottom, while dry air is blown in an upward direction (in counter-current).

In this embodiment, the vibration means comprise a first plate-shaped vibrating element 11 and a second plate-shaped vibrating element 12, which is positioned downstream (lower) relative to the first vibrating element 11. Vibrating element 12 is not clearly visible in this figure but is shaped identically to vibrating element 11. Both vibrating elements 11;12 are disc-shaped and placed at an angle in the channel to facilitate a smooth, gravity-driven flow-through of the granulate. The disc-shaped embodiment of the vibrating elements 11;12 eliminates unpredictable natural vibration modes and ensures a predictable, homogeneous radial energy transfer to the surrounding granulate mass.

Directly downstream under the disc-shaped vibrating elements 11;12, the ultrasonic transducers are mounted in a housing 13;14 and as a result are not shown. As a result, the transducers are physically shielded from the impact of the downward granulate flow. The housing of these transducers is aerodynamically shaped. This specific shape is arranged to guide the upward flowing dry air with minimal flow resistance around the transducers, which prevents laminar disturbances and ensures maximum and uniform cooling of the warming transducers by the passing dry air.

In operation, the upper transducer operates at a lower frequency and higher power to break down hydrogen bonds in the granulate via cavitation, while the lower transducer operates at a higher frequency and lower power to bring the reduced moisture bubbles exactly into resonance, to maximize the mass flux.

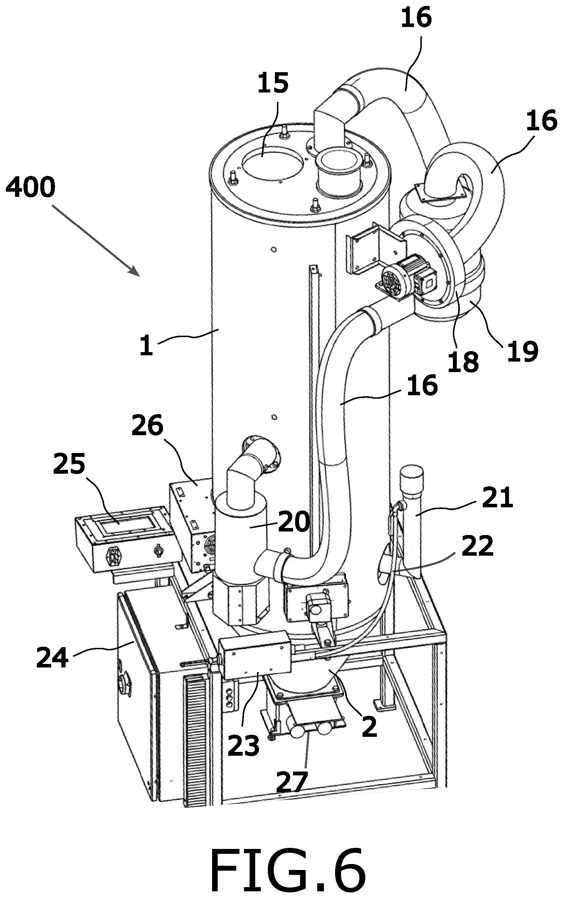

Figure 6 shows an isometric view of a larger embodiment of the device 300, which is applied to a channel 1 larger than 75 litres, which is provided with an energy-saving dual air system. The channel 1 is provided on the outside with various components to facilitate this dual air circuit.

The top side of the device 300 is provided with an opening 15 to introduce granulate into the channel 1. At the top side, there is a return line 16 and a filter 17 for discharging and circulating the process air. Via a blower 18 and an external filter 19, recirculating air is pushed via the return line 16 through a first heating pipe 20, after which this warm recirculating air is blown into the channel 1 to preheat the granulate.

In addition, the device 300 is provided with a second, separate heating pipe 21 for heating dry compressed air, which is supplied via compressed-air line 22.

The device 300 further comprises a valve cabinet 23 for the fine-tuning of the compressed air flow, a main control cabinet 7 and an air dehumidifier 25 with a control panel. On the outer side of the channel 1, the housings for the ultrasonic transducers 26 (in this case mounted from the outside via vibrating elements extending through the wall) are also visible. At the very bottom is a collection bin or suction bin 27 for the discharge of the dried granulate.

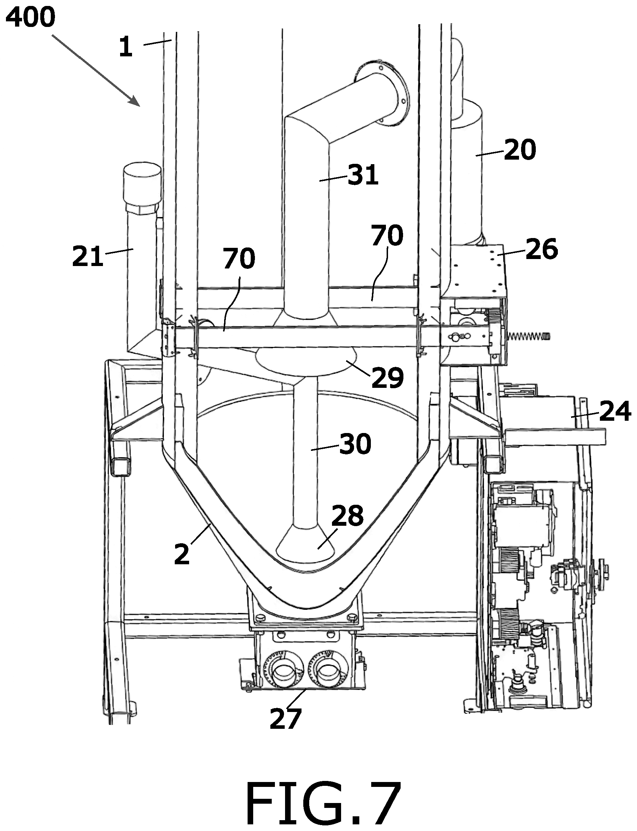

Figure 7 shows a detail view in cross-section of the lower, funnel-shaped portion of the device 400 from Figure 6, to clarify the internal operation of the dual air system.

Two separate air outlets 28;29 are visible in the hopper. At the very bottom is a first outlet pipe 30 with the conical air outlet 28, arranged for blowing out the warm, dry compressed air. This compressed air flows in an upward direction to extract the remaining moisture from the granulate in the last phase of the process.

Above this first outlet, a second, larger outlet pipe 29 is positioned, also provided with the conical air outlet 29. This second outlet 29 is arranged for blowing out the warm recirculating air. The granulate flows from top to bottom in the channel and is thus first cost-efficiently and thermally prepared in the upper part by the recirculating air. Only in the lower part does the granulate come into contact with the pure dry compressed air. This dual air system makes it possible to optimally tune the ratio between expensive compressed air and cheaper recirculating air (for example in a ratio of 1:3) via the control, which leads to a considerable reduction in the compressed air consumption and the operational costs of large drying installations. Just above these outlets, the transverse vibrating elements 70 in the granulate stream are visible, which transfer the ultrasonic vibration energy to the material.

The invention is naturally not limited to the described and shown preferred embodiment but extends to any embodiment that falls within the scope of the protection, as defined in the claims and viewed in the light of the preceding description and accompanying figures.

The shape of the channel is not limited to a tubular channel but can have any shape through which a flow of material can be transported. The channel does not have to enclose the material. An example of another embodiment of the channel is a horizontal channel, in which the channel is open at the top side. The shape of the vibrating plates is not limited to the shown plate-shaped vibrating plates but can comprise any shape suitable for conducting ultrasonic sound.

## Claims

1. Method for drying hygroscopic granulate comprising the following steps:
a) extracting liquid from the granulate by means of a drying process, wherein liquid absorbed by the granulate is extracted from the granulate;
b) causing the granulate to vibrate by means of vibration means with a vibration frequency higher than 15,000 Hertz during the execution of step a);
**characterized in that** the vibration means comprise one or more plate-shaped vibrating elements that are positioned in a channel and are physically in direct contact with the granulate, wherein at least one ultrasonic transducer is directly mounted on the plate-shaped vibrating element to cause it to vibrate.

2. Method according to claim 1, wherein the drying process uses air for drying the granulate and step b) comprises the following sub-step: b1) directing the air from the drying process over the vibration means.

3. Method according to claim 1 or 2, wherein the drying process uses dry air and the channel comprises a hopper, wherein the channel is arranged substantially vertically and wherein the dry air is blown upward via an underside of the hopper and the granulate is introduced into the channel via a top side of the hopper, wherein the granulate leaves the drying hopper via an underside of the channel.

4. Method according to any one of claims 1 to 3, wherein causing the granulate to vibrate downstream is conducted sequentially in at least two phases:
- a first phase in which the granulate is exposed to a first ultrasonic vibration with a first frequency and a first power;
- a second subsequent phase in which the granulate is exposed to a second ultrasonic vibration with a second frequency and a second power;
wherein the second frequency is higher than the first frequency, and the second power is lower than the first power.

5. Method according to claim 4, wherein the first ultrasonic vibration is arranged to cause cavitation in moisture bubbles within the granulate to break down hydrogen bonds, and the second ultrasonic vibration is arranged to bring the moisture bubbles reduced by cavitation into resonance to increase the diffusion rate and mass flux.

6. Method according to any one of claims 1 to 5, wherein the granulate is preheated in an upper part of the channel with warm recirculating air, and the granulate is further dried in a lower part with dry compressed air.

7. Device for drying polymer granulate, comprising drying means for drying the polymer granulate in a continuous process, and a channel for passing the granulate through the drying means, **characterized in that** the device further comprises one or more vibration means for causing the granulate to vibrate by means of vibrations by using sound waves having a frequency higher than 15,000 Hertz, wherein the vibration means comprise at least one ultrasonic transducer and one or more plate-shaped vibrating elements, which plate-shaped vibrating elements are positioned in the channel and are arranged to be physically in contact with the granulate, and wherein the ultrasonic transducer is directly mounted on the plate-shaped vibrating element and is arranged to cause the vibrating element to vibrate.

8. Device according to claim 7, wherein the drying means comprise blowing means for blowing air over the granulate and the device is further arranged to blow the air coming from the blowing means over the vibration means.

9. Device according to claim 7 or 8, wherein the one or more plate-shaped vibrating elements extend from outside the channel into the channel and wherein the ultrasonic transducer is mounted on the vibrating element on the outer side of the channel.

10. Device according to any one of claims 7 to 9, wherein the drying means comprise blowing means arranged to blow dry air, and wherein the channel is tubular and is arranged substantially vertically, wherein the channel comprises a funnel-shaped portion at an underside, wherein, during operation, the dry air coming from the blowing means is directed upward through the channel and through the funnel-shaped portion, and wherein the device comprises collecting means for collecting granulate at an underside of the funnel-shaped portion, which granulate has been fed into the channel via a top side of the channel.

11. Device according to claim 7 or 8 in combination with claim 10, wherein the one or more plate-shaped vibrating elements are disc-shaped and wherein the vibrating elements with the transducers mounted thereon are located entirely within the channel.

12. Device according to any one of claims 7 to 11, comprising at least a first ultrasonic transducer and a second ultrasonic transducer respectively mounted on a first plate-shaped vibrating element and a second plate-shaped vibrating element in the channel, wherein the second ultrasonic transducer is positioned downstream relative to the first ultrasonic transducer, and wherein the first ultrasonic transducer is arranged for a first frequency and a first power, and the second ultrasonic transducer is arranged for a second, higher frequency and a second, lower power.

13. Device according to claim 11 or 12, wherein the ultrasonic transducers are placed in the channel downstream under the plate-shaped vibrating elements, and wherein the ultrasonic transducers comprise a housing with a shape that is arranged to guide air that is blown upward from the funnel-shaped portion around the transducers.

14. Device according to any one of claims 7 to 13, wherein the drying means comprise a first outlet at an underside of the channel for blowing out dry compressed air, and comprise a second outlet, positioned above the first outlet, for blowing out warm recirculating air for preheating the granulate in the channel.
